(19) Europäisches Patentamt / European Patent Office / Office européen des brevets

(11) **EP 2 999 229 A1**

(12) **EUROPEAN PATENT APPLICATION**

(43) Date of publication:
**23.03.2016 Bulletin 2016/12**

(51) Int Cl.:
*H04N 21/2343* (2011.01)

(21) Application number: **14306457.4**

(22) Date of filing: **22.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Alberi-Morel, Marie Line**
**91620 NOZAY (FR)**
• **Faucheux, Frédéric**
**91620 NOZAY (FR)**

(74) Representative: **Hirsch & Associés**
**137, rue de l'Université**
**75007 Paris (FR)**

(54) **Method for storing and delivering a video sequence using a cloud network**

(57) This invention relates to a method for storing and delivering a video sequence using a cloud network, the method comprising transferring an original raw video from a client to said cloud network, transforming said original raw video into a first compressed entity representative of said original raw video and a second compressed entity representative of said original raw video, storing said first compressed entity and said second compressed entity in the cloud network, receiving from a target user a request to deliver the video sequence representative of said original raw video, delivering said first compressed entity and said second compressed entity from the cloud network to said target user, the video sequence being adapted to be computationally reconstructed from said first compressed entity and said second compressed entity by the target user.

Figure 1

## Description

### FIELD OF THE INVENTION

The invention relates to cloud computing environments, and more precisely to storing and delivering a video sequence using a cloud network.

### BACKGROUND OF THE INVENTION

Multimedia consumers are becoming increasingly fond of cloud multimedia applications, such as Digital Video Recording, Catch Up TV, Video On Demand or user-created video content. Thanks to a cloud data storage service, it has become very easy for a multimedia consumer to consume multimedia applications beyond their mobile terminal's physical limits, via remote cloud servers. This offer of "unlimited capacity" has to be guaranteed for data-intensive applications asking for huge amount of storage space and high delivery bandwidth and for mobile users even with restricted network capacity. Minimizing the data storage space and the data resolution becomes a crucial issue for cloud providers.

When a cloud provider wants to optimize the use of its resources in a cloud infrastructure in order to optimize its infrastructure costs, such as the cost of processing or the excessive amounts of storage needed to satisfy cloud users, there are very few solutions.

A broad set of solutions aimed at limiting the consumption of storage capacity can be found in the literature. Traditionally, storage optimization methods typically consist of thin provisioning, deduplication, and compression. For the purpose of slowing down the increase in storage space, redundancy and wastage is removed and data placement is optimized. Thin provisioning targets wasted storage that is allocated but unused because of overprovisioning. Deduplication targets redundant or duplicate data and creates single instances of data. Compression targets the reduction of storage footprint by "squeezing" the data to make it smaller. Traditionally, compression is obtained by a reduction in encoding bits by deleting the redundancy that results from the high correlation between one pixel and its neighboring pixels inside an image.

In the prior art, it is known to use an efficient transcoding strategy for minimizing the excessive amount of disk space used to store in the cloud multiple representations of a same video. Copy multiplication relies on the large diversity of client demands resulting from a large number of video compression techniques and packaging formats. The storage footprint can be more diminished with the use of scalable video coding, but the gain on the storage space is obtained at the cost of an increase in video transmission bandwidth.

### SUMMARY OF THE INVENTION

The aim of the present invention is to alleviate at least partly the above mentioned drawbacks and to improve the situation, notably by satisfying demands for "unlimited capacity" in data-intensive applications requiring huge amounts of storage space and high delivery bandwidth, and this even for mobile users and with restricted network capacity.

A further object of the present invention consists in optimizing both the data storage and the network transmission cost.

This aim is achieved with a method for storing and delivering a video sequence using a cloud network comprising :

- transferring an original raw video from a client to said cloud network,
- transforming said original raw video into a first compressed entity representative of said original raw video and a second compressed entity representative of said original raw video,
- storing said first compressed entity and said second compressed entity in the cloud network,
- receiving from a target user a request to deliver the video sequence representative of said original raw video,
- delivering said first compressed entity and said second compressed entity from the cloud network to said target user, the video sequence being adapted to be computationally reconstructed from said first compressed entity and said second compressed entity by the target user.

The method according to the invention makes it possible to optimize data storage and the network transmission cost.

Preferred embodiments comprise one or more of the following features, which can be taken separately or together, either in partial combination or in full combination.

According to one embodiment, the method includes setting a download bandwidth limit for delivering data from the cloud network to the target user :

- below which the cloud network delivers said first compressed entity and said second compressed entity to said target user in order for the video sequence to be computationally reconstructed by the target user, and,
- above which the cloud network delivers the video sequence to said target user, the video sequence being computationally reconstructed by the cloud network prior to the step of delivering to the target user.

According to another embodiment, said first compressed entity is representative of a down-sampled version of said original raw video.

According to another embodiment, said second compressed entity is representative of local spatial descriptors of said original raw video.

According to another embodiment, the method further comprises a step of building said local spatial descriptors from a database composed of high resolution key frames.

According to another embodiment, said high resolution key frames are extracted from said original raw video.

According to another embodiment, the method further comprises a step of building said database with external images.

According to another embodiment, the method comprises:

- spatially indexing patches of said high resolution key frames or external images,
- establishing spatial correspondences between patches of said high resolution key frames or external images and patches of said down-sampled version of the original raw video via said local spatial descriptors,
- predicting said video sequence by associating said patches of said down-sampled version of the original raw video with patches of high resolution key frames or external images by using the spatial correspondences and the local spatial descriptors, the local spatial descriptors being coupled with the spatial correspondences and associated with the database which is stored by the target user.

According to another embodiment, a Nearest Neighbor Search (NNS) method is applied during the step of establishing spatial correspondences.

According to another embodiment, the down-sampled version has a lower resolution than said video sequence issued from the method, the resolution of said video sequence being upscaled via a super-resolution algorithm.

According to another embodiment, said step of building is implemented during the step of transforming said original raw video, the method comprising a step of delivering said high resolution key frames from the cloud network to said target user.

According to another object of the invention, a computer program product comprises computer-executable instructions for performing a method according to any of the embodiments herein mentioned.

According to another object of the invention, a computer readable medium has a computer program comprising program instructions, the computer program being loadable into a data-processing unit and adapted to cause execution of the method according to any of the embodiments herein mentioned when the computer program is run by the data-processing unit.

According to another object of the invention, a video server is adapted for delivering a video sequence representative of an original raw video to a target user, said video server delivering a first compressed entity representative of said original raw video and a second compressed entity representative of said original raw video to the target user.

According to an embodiment, a data transfer protocol sets a download bandwidth limit for delivering data from the video server to the target user:

- below which the video server is adapted to deliver said first compressed entity and said second compressed entity to said target user in order for the video sequence to be computationally reconstructed by the target user, and,
- above which the video server is adapted to deliver the video sequence to said target user, the video sequence being computationally reconstructed by the cloud network prior to the step of delivering it to the target.

According to an embodiment, the first compressed entity is representative of a down-sampled version of said original raw video and the second compressed entity is representative of local spatial descriptors of said original raw video.

According to an embodiment, the video server further delivers to the target user, a database composed of:

- high resolution key frames extracted from said original raw video, or,
- external images unattached to said original raw video.

According to another object of the invention, a terminal for connecting to a video server at a receiver's side is adapted for receiving a first compressed entity representative of an original raw video and a second compressed entity representative of the original raw video from the video server, and a database composed of high resolution key frames extracted from said original raw video or external images unattached to said original raw video, the terminal comprising means for computationally reconstructing a video sequence from said first compressed entity, said second compressed entity and said database.

According to an embodiment, the terminal is adapted for receiving the database composed of external images unattached to said original raw video from:

- the video server, or,
- a computer readable medium

Further features and advantages of the invention will appear from the following description of embodiments of the invention, given as nonlimiting examples, with reference to the accompanying drawings listed hereunder.

DETAILED DESCRIPTION OF THE INVENTION

The invention aims, notably, at proposing a method for reducing the high cost of processing and excessive storage requirements in a cloud, while satisfying cloud users and in particular mobile cloud users.

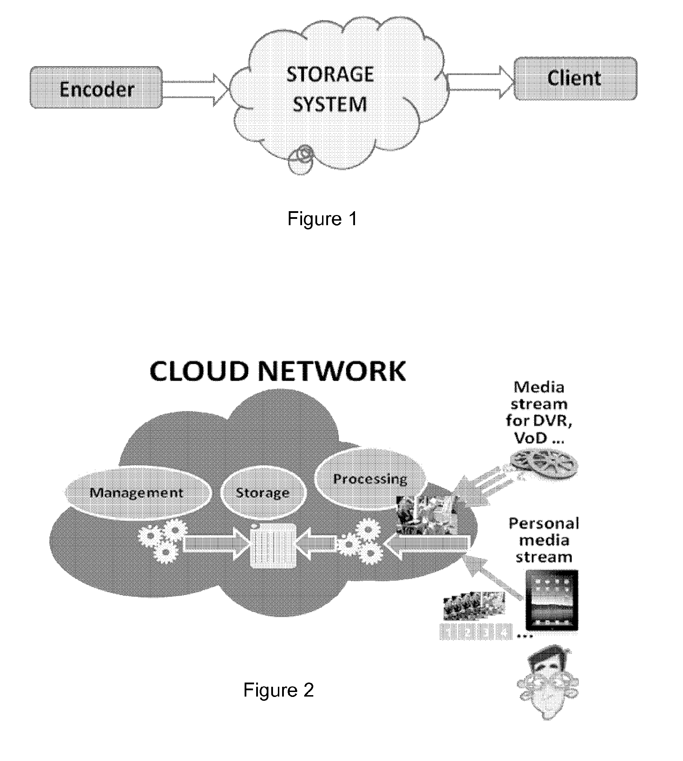

Figure 1 illustrates the high level model for the end-to-end scenario including a cloud network in which videos are uploaded via files through an encoder that standardizes compressed entities representative of the uploaded original raw video, said compressed entities being stored in a cloud video storage system. Then, the files of the compressed entities are delivered in an efficient way to cloud users on demand. Therefore, the end-to-end system the architecture of which is depicted in the figure 1 provides the main functionalities, such as uploading the original raw video from cloud users, storing compressed entities representative of said original raw video, downloading compressed entities on request, optionally at an optimized or acceptable rate that meets an acceptable viewer quality of experience.

Figure 2 illustrates the cloud user who desires to upload his original raw video. The cloud user sends a request to the cloud video storage system. When the request is accepted the cloud user transfers the original raw video to the cloud network, in particular to the cloud video storage system. Preferentially, the cloud user transfers the original raw video at a suitable bit-rate in the desired video representation, i.e. standard video format, spatial resolution (overall pixel number), temporal resolution (frame rate).

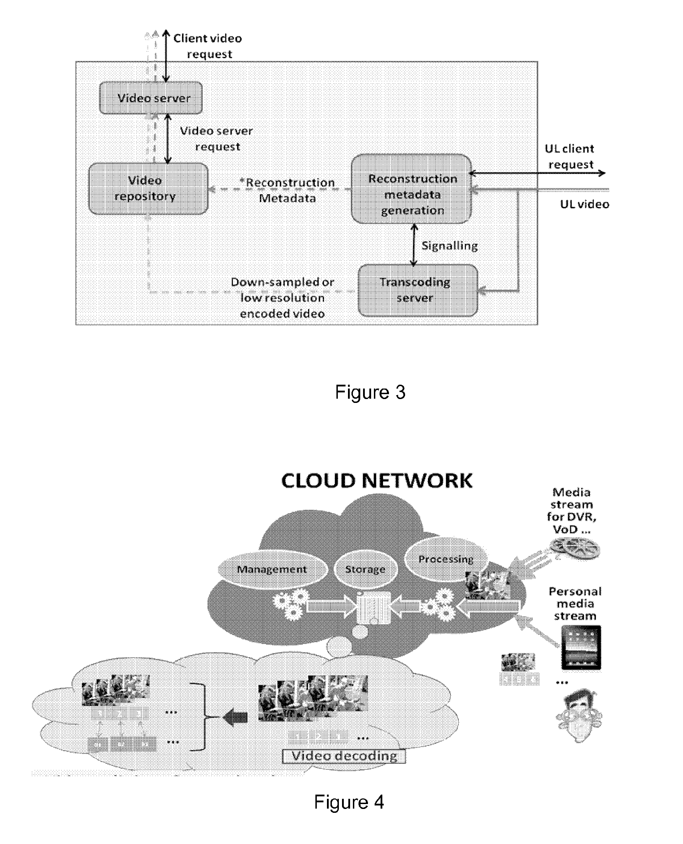

As shown in figure 3, the transferred original raw video is delivered to the cloud network that comprises a generation module of reconstruction metadata and a transcoding server.

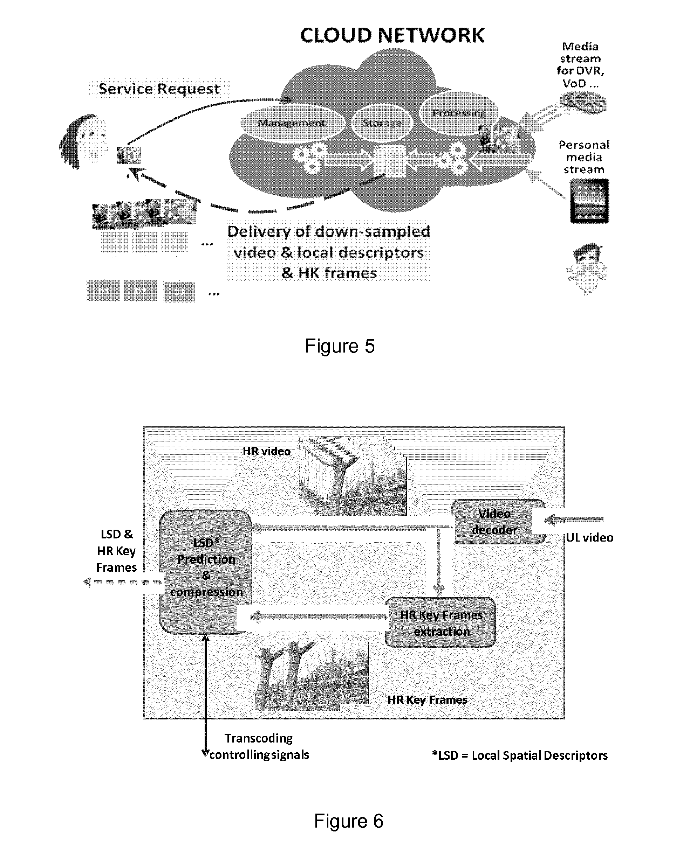

According to an embodiment, the generation module of reconstruction metadata predicts the second compressed entity which is representative of local spatial descriptors of said original raw video (figure 6). The prediction of said local spatial descriptors is done employing a database composed of high resolution key frames or external images. The database is built either offline with external images or either online with high resolution key frames which are extracted from said original raw video. The high resolution key frames can be periodically extracted from said original raw video at a predetermined frequency $F_k$. At the user's side, the cloud user uses the same database to construct the video sequence as the one used to build the local spatial descriptors. Consequently, in the case of a database composed of high resolution key frames extracted from the original raw video, the cloud network should also transmit the database to the cloud user, i.e. the high resolution key frames (or external images), in addition to local spatial descriptors and a down sampled version of the original raw video.

In the case of a database composed of external images, i.e. unattached to said original raw video, the cloud network can transmit the database to the cloud user, in addition to local spatial descriptors and the down sampled version of the original raw video. Alternatively, the cloud network does not transmit the database to the cloud user, because the database composed of external images is already stored in the user's terminal. For instance, the external images can be stored in the user's terminal prior to the transmission of local spatial descriptors and down sampled version from the cloud network to the user's terminal. These external images can be provided by a computer readable medium adapted to store such external images.

According to an embodiment, the transcoding server predicts the first compressed entity which is representative of a down-sampled version of said original raw video.

Preferentially, the database is stored under a compressed form with conventional methods, so as to form a third compressed entity representative of the database. The size of the database is dependent on the down-sampling factor used to down-sample the original raw video and the size of the patches of the down-sampled version of the original raw video. Therefore, as shown in figure 3, an interface carrying controlling signals is established between the transcoding server and the generation module for reconstruction metadata to inform the generation module of the down-sampling factor fixed by the transcoding server.

The cloud video storage system included in the cloud network comprises a video repository in which the high resolution key frames, the down-sampled version of said original raw video and local spatial descriptors of said original raw video are stored, under a compressed form with conventional methods, such as example H264 for low resolution video, JPEG2000 for high resolution key frames and a Huffman encoder for local spatial descriptors (figure 4).

Figure 3 illustrates that the cloud video storage system further comprises a video server associated with said video repository. This video server receives from a target user a request to deliver the video sequence representative of said original raw video and checks if the required video sequence is stored in the video repository as first and second compressed entities. If the video server finds the desired format and resolution, the first compressed entity and the compressed entity are delivered from the video repository to the target user via the video server (figures 3 and 5). Once the first compressed entity and the second compressed entity have been received by the target user, the video sequence can be computationally reconstructed from said first compressed entity and said second compressed entity by the target user. The target user proceeds to the decompression of the reconstruction metadata and to the decoding of the down-sampled version of the original raw video.

In other terms, the architecture implementing the method according to the invention includes the cloud user's terminal (such as a mobile phone, a PDA, a smartphone, a personal computer etc.) connected to the cloud network. The cloud network comprises the encoder ensuring transformation of the original raw video into the first compressed entity and the second compressed entity. The first compressed entity and the second compressed entity are then directed to the video repository to be stored. The video server allows the target user to issue a request to deliver the video sequence and decide whether the first compressed entity and the second compressed entity can be delivered by the video repository to the target user.

The video server and the user terminal are configured to establish download sessions between each other, particularly for the exchange of data such as down-sampling version, local spatial descriptor, and high resolution key frames.

According to an embodiment, it is further possible to define a data transfer protocol in which there is a download bandwidth limit for delivering data from the video server to the target user. Below the download bandwidth limit, the video server delivers said first compressed entity and said second compressed entity to said target user in order for the video sequence to be computationally reconstructed by the target user. Above the download bandwidth limit, the cloud network delivers the video sequence to the target user and the video sequence is computationally reconstructed by the cloud network prior to the delivering of the data to the target user; in this case, the database can be in the cloud network without sending the high resolution key frames to the target user. The data transfer protocols will preferably be chosen to obtain a maximum transmission rate of data, in order to minimize the response time to possible interactions.

In others terms, the method for storing and delivering the video sequence of the cloud network comprises :

- transferring the original raw video from the client to said cloud network,
- transforming said original raw video into the first compressed entity representative of said original raw video and the second compressed entity representative of said original raw video,
- storing said first compressed entity and said second compressed entity in the cloud network,
- receiving from the target user the request to deliver the video sequence representative of said original raw video,
- delivering said first compressed entity and said second compressed entity from the cloud network to said target user, the video sequence being adapted to be computationally reconstructed from said first compressed entity and said second compressed entity by the target user.

According to an embodiment, the method further comprises the following steps:

- spatially indexing patches of said high resolution key frames or external images,
- establishing spatial correspondences between patches of said high resolution frames or external images and patches of the frames of said down-sampled version of the original raw video via said local spatial descriptors,
- predicting said video sequence by associating said patches of the frames of said down-sampled version of the original raw video with patches of high resolution key frames by using the local spatial descriptors, the local spatial descriptors being associated with the database which is stored by the target user.

More precisely, a high resolution key frame is defined as a single picture of the original raw video, and an external image is defined as a single picture provided by an image bank. The high resolution key frame is split into a number of patches depending on parameters relative to the desired size of the database and to the desired quality for the video sequence issued from the method. For example, the high resolution key frame can depend on the down-sampling factor in order to control the quality of the video sequence. These parameters can be controlled by the interface carrying the controlling signals established between the transcoding server and the generation module for reconstruction metadata. Each of the patches of high resolution key frames or external images are indexed.

The down-sampled version of the original raw is decomposed into several patches too. Then, there is a step for establishing spatial correspondences between patches of the frames of said down-sampled version of the original raw video and patches of said high resolution key frames or external images. For one patch of one frame of said down-sampled version, there is one patch of one high resolution key frame or external image that is chosen because it looks similar, for example in terms of chrominance, luminance etc. This defines one spatial correspondence.

Finally, local spatial descriptors are used to map spatially all the frames of said down-sampled version of the original raw video to high resolution key frames or external images of the database. More specifically, local spatial descriptors are used to map spatially all the patches of the down-sampled version of the original raw video to similar patches of high resolution key frame or external images of the database. The recorded indexes of the spatial correspondences define the local spatial descriptors. Doing this mapping contributes to successfully reconstructing the original raw video from its compressed down-sampling version by retrieving the high frequencies removed in the latter. More particularly, employing local spatial descriptors enables a super-resolution algorithm to estimate successfully a large part of the missing high resolution details removed from the original image during the down-sampling process and, thus to reconstruct the video sequence representative of the original raw video with a high visual quality. For instance, the visual quality is evidenced by clearer outlines of patterns having a multiplicity of details and a wide variety of colors.

As can be seen in figure 6, the local spatial descriptors are created in the reconstruction metadata generation module. According to an embodiment, the uploaded original raw video first enters the video decoder that allows, in output, the prediction and compression of the local spatial descriptors and the extraction of the high resolution key frames from the original raw video. There is a close link between the high resolution key frames and the local spatial descriptors since, while establishing spatially correspondences, the high resolution key frames or external images are taken into account in order to determine the chosen local spatial descriptors. Moreover, said controlling signals give information relative to the down-sampling factor fixed by the transcoding server in order to choose local spatial descriptors. Lastly, as can be seen in figure 6, a high resolution video is transmitted from the video decoder to the video module for processing the local spatial descriptors.

Once the spatial correspondences have been established, patches of the down-sampled version of the original video are associated with patches of high resolution key frames or external images via the local spatial descriptors, the local spatial descriptors being associated with the database which is stored by the target user. One patch of a down-sampled version of the original video is thus predicted thanks to one or multiple patch(-es) of a high resolution key frame or external image, via local spatial descriptors that request the patches (of the high resolution key frame or external image) directly to the database.

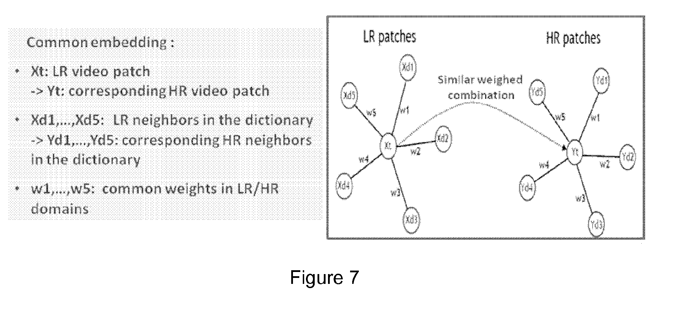

The down-sampled version having a lower resolution than said video sequence, the resolution of said video sequence is upscaled via the super-resolution algorithm. Thanks to the super-resolution algorithm, it is possible to retrieve the high frequencies removed in the down-sampling version. To construct the video sequence delivered to the target user, a Nearest Neighbor Search method is preferentially applied during the step of establishing spatial correspondences. The super-resolution algorithm implements an algorithm relying on the assumption that the feature spaces of the down-sampling version and the high resolution key frames or external images are locally isometric (i.e share similar neighborhood structures) and that the assembly of the patches of the frames of the down-sampled version results from same-weighted combinations of the assembly of the patches of high resolution key frames or external images (figure 7). As a consequence, the video sequence is constructed on the basis of the down-sampling version that is reconstructed by applying the same assembly as the high resolution key frames or external images selected in the database.

Knowing local spatial descriptors, the example-based neighbor embedding super-resolution algorithms can predict the optimal weighted combination leading to visually-pleasing reconstruction of each video frame of said video sequence.

Typically, the procedure for generating local descriptors is as follows:

- building the database from high resolution key frames or from external images
- splitting the high resolution key frames (or external images) of index n into P patches of high resolution key frames (or external images) overlapped,
- computing the local spatial descriptor using the Nearest Neighbor Search method (NNS).

NNS is a conventional method to find K Nearest Neighbors (K-NN) in training patch sets, according to a criterion, with K being the number of nearest neighbors. This method aims at finding the most closed patches with respect to a reference patch. The search for K-NN relies on the Euclidean distance given by the following formula:

$$\mathcal{N}_i = \underset{\mathbf{x}_d^j \in \mathcal{X}_d}{\arg\min}{}^K \left\| \mathbf{x}_t^i - \mathbf{x}_d^j \right\|^2$$

Where $x_t$ represents a patch of said high resolution video and $x_d$ represents a patch of the high resolution key frames (or external images), with j comprised between 0 and K (no. of neighbors).

Thus, NNS is applied on the database to find the spatial correspondences between each patch of each frame of said high resolution video and the overall patches of high resolution key frames (or external images) stored in the database, and this operation is done on the whole of the video. The local spatial descriptors are thus created on the basis of NNS.

After these operations, the local spatial descriptors have to be compressed optimally to contribute to the reduction of the stored data in the video repository.

## Claims

1. Method for storing and delivering a video sequence using a cloud network, the method comprising :

   - transferring an original raw video from a client to said cloud network,
   - transforming said original raw video into a first compressed entity representative of said original raw video and a second compressed entity representative of said original raw video,
   - storing said first compressed entity and said second compressed entity in the cloud network,
   - receiving from a target user a request to deliver the video sequence representative of said original raw video,

- delivering said first compressed entity and said second compressed entity from the cloud network to said target user, the video sequence being adapted to be computationally reconstructed from said first compressed entity and said second compressed entity by the target user.

2. Method according to claim 1, comprising setting a download bandwidth limit for delivering data from the cloud network to the target user:

- below which the cloud network delivers said first compressed entity and said second compressed entity to said target user in order for the video sequence to be computationally reconstructed by the target user, and,
- above which the cloud network delivers the video sequence to said target user, the video sequence being computationally reconstructed by the cloud network prior to the step of delivering it to the target user.

3. Method according to claims 1 or 2, wherein said first compressed entity is representative of a down-sampled version of said original raw video.

4. Method according to claims 1 or 2, wherein said second compressed entity is representative of local spatial descriptors of said original raw video.

5. Method according to claim 4, comprising a step of building said local spatial descriptors from a database composed of high resolution key frames.

6. Method according to claim 5, wherein said high resolution key frames are extracted from said original raw video,

7. Method according to claim 5, comprising a step of building said database with external images.

8. Method according to any of claims 6 or 7, comprising :

- spatially indexing patches of said high resolution key frames or external images,
- establishing spatial correspondences between patches of said high resolution key frames or external images and patches of said down-sampled version of the original raw video via said local spatial descriptors,
- predicting said video sequence by associating said patches of said down-sampled version of the original raw video with patches of high resolution key frames or external images by using the the local spatial descriptors, the local spatial descriptors being associated with the database which is stored by the target user.

9. Computer program product comprising computer-executable instructions for performing a method according to any of the claims 1 to 8.

10. Video server being adapted for delivering a video sequence representative of an original raw video to a target user, said video server delivering a first compressed entity representative of said original raw video and a second compressed entity representative of said original raw video to the target user.

11. Video server according to claim 10, wherein a data transfer protocol sets a download bandwidth limit for delivering data from the video server to the target user:

- below which the video server is adapted to deliver said first compressed entity and said second compressed entity to said target user in order for the video sequence to be computationally reconstructed by the target user, and,
- above which the video server is adapted to deliver the video sequence to said target user, the video sequence being computationally reconstructed by the cloud network prior to the step of delivering it to the target.

12. Video server according to claim 10 or 11, wherein the first compressed entity is representative of a down-sampled version of said original raw video and the second compressed entity is representative of local spatial descriptors of said original raw video.

13. Video server according to any of claims 10 to 12 further delivering, to the target user, a database composed of:

- high resolution key frames extracted from said original raw video, or,
- external images unattached to said original raw video.

14. Terminal for connecting to a video server at a receiver's side, said terminal being adapted for receiving a first compressed entity representative of an original raw video and a second compressed entity representative of the original raw video from the video server, and a database composed of high resolution key frames extracted from said original raw video or external images unattached to said original raw video, the terminal comprising means for computationally reconstructing a video sequence from said first compressed entity, said second compressed entity and said database.

15. Terminal according to claim 14, being adapted for receiving the database composed of external images unattached to said original raw video from :the video server, or,

- a computer readable medium

Figure 1

Figure 2

Figure 3

Figure 4

Figure 5

Figure 6

Figure 7

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

Application Number

EP 14 30 6457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 657 444 A1 (MYERS ROBERT LINWOOD [CA]) 9 September 2010 (2010-09-09) * paragraph [0009] * * paragraph [0028] * ----- | 1,3-10, 12,13 | INV. H04N21/2343 |
| A | Anonymous: "Nearest neighbor search - Wikipedia, the free encyclopedia", , 5 September 2014 (2014-09-05), XP055172771, Retrieved from the Internet: URL:http://en.wikipedia.org/w/index.php?ti tle=Nearest_neighbor_search&oldid=62424387 7 [retrieved on 2015-03-02] * the whole document * ----- | 1 | |

-/--

TECHNICAL FIELDS
SEARCHED      (IPC)

H04N

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 26 June 2015 | Schneiderlin, Jean |

EPO FORM 1503 03.82 (P04E07)

Europäisches
Patentamt

European
Patent Office

Office européen
des brevets

# PARTIAL EUROPEAN SEARCH REPORT

Application Number

EP 14 30 6457

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| A | STRAT SABIN TIBERIUS ET AL: "Retina enhanced SIFT descriptors for video indexing", 2013 11TH INTERNATIONAL WORKSHOP ON CONTENT-BASED MULTIMEDIA INDEXING (CBMI), IEEE, 17 June 2013 (2013-06-17), pages 201-206, XP032474499, ISSN: 1949-3983, DOI: 10.1109/CBMI.2013.6576582 ISBN: 978-1-4799-0955-1 [retrieved on 2013-08-07] * the whole document * * abstract * ----- | 4-8,12, 13 | |

TECHNICAL FIELDS
SEARCHED (IPC)

EPO FORM 1503 03.82 (P04C10)

Europäisches
Patentamt

European
Patent Office

Office européen
des brevets

**INCOMPLETE SEARCH**
**SHEET C**

Application Number

EP 14 30 6457

Claim(s) completely searchable:
1, 3, 4, 9, 10

Claim(s) searched incompletely:
5-8, 12, 13

Claim(s) not searched:
2, 11

Reason for the limitation of the search:

It cannot be understood (Art. 84 EPC) what is meant by "- below which the cloud network delivers said first compressed entity and said second compressed entity to said target user in order for the video sequence to be computationally reconstructed by the target user, and, - above which the cloud network delivers the video sequence to said target user," in claims 2 and 11. The corresponding description page 10 (line 20 and following) is apparently a special embodiment not linked to the rest of the invention. This embodiment does not appear to clarify how the bandwidth is limited.
The applicant argued in the reply to the invitation pursuant to Rule 63(1) that the method of the invention sets a limit but did not explain how the limit is set. This limit is supposed to determined where the video sequence is reconstructed. However the examiner was unable to understand with what this limit is supposed to be compared.
It is not at all clear how claims 3, 4 and 12 can dependend on claims 2 and 11 since the description appears to present claims 2 and 11 as a stand alone embodiment. Claims 3,4 and 12 when dependent on claims 2 and 11 are not supported by the description.
The examiner tried to interpret page 10 line 20 to page 11 line 2 to understand claims 2 and 11 but did not manage to make any sense of it, nor to link it to any other embodiment. The search was therefore restricted to the literal wording of claims 1 and 10 (Rule 63(2)EPC).
It is not clear what are the "local spatial descriptors" mentioned in claims 4, 5 and 12, nor is it clear how they are calculated. This expression is first used on page 8 but no explanation is given as to its meaning. Page 14 (line 26 and following) mentions that they are calculated using the Nearest Neighbor Search method but there is no explanation on how this method is used. Page 15 does not define what is a neighbor, what is patch, what is Ni...
The applicant argued in the reply to the invitation pursuant to Rule 63(1) that the "local spatial descriptors" are described page 12 line 23 - page 13 line 8 and that this method is common knowledge. As suggested by the applicant, the examiner check https://en.wikipedia.org/wiki/Nearest_neighbor_search but no reference to "local spatial descriptors" could be found.
It is not clear what are the "patches" mentioned in claim 8. The applicant argued that it is clear that it refers to small pieces of a "high rate key frame". However the examiner does not see any "high rate key frame" in the application.
The examiner tried to interpret page 14 line 26 to page 15 line 2 to understand claims 4-8 and 12 but did not manage to make any sense of it, nor to link it to any other embodiments. The search for the second group of invention was therefore restricted to the literal wording of claims 4

Europäisches
Patentamt

European
Patent Office

Office européen
des brevets

**INCOMPLETE SEARCH
SHEET C**

and 12 (Rule 63(2)EPC).

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1, 3-10, 12, 13

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 14 30 6457

The Search Division considers that the present European patent application does not comply with the requirements of unity of invention and relates to several inventions or groups of inventions, namely:

1. claims: 1-3, 9-11

   compression system with two layers, setting a download limit bandwidth.

1.1. claim: 3

   compression system with two layers, detail on the first layer

   ---

2. claims: 4-8, 12, 13

   compression system with two layers, detail on the second layer.

   ---

3. claims: 14, 15

   decompression system with two layers using a database.

   ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 14 30 6457

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2015

| Patent document cited in search report | Publication date | Patent family member(s) | Publication date |
|---|---|---|---|
| CA 2657444 A1 | 09-09-2010 | NONE | |

EPO FORM P0459

For more details about this annex : see Official Journal of the European Patent Office, No. 12/82